(19) Europäisches Patentamt
European Patent Office
Office européen des brevets

(11) **EP 3 722 265 B1**

(12) **FASCICULE DE BREVET EUROPEEN**

(45) Date de publication et mention de la délivrance du brevet:
**19.07.2023 Bulletin 2023/29**

(21) Numéro de dépôt: **19305471.5**

(22) Date de dépôt: **11.04.2019**

(51) Classification Internationale des Brevets (IPC):
***G05B 19/418*** *(2006.01)*

(52) Classification Coopérative des Brevets (CPC):
**C03B 27/0413; C03B 27/0417; G05B 19/41875;**
Y02P 90/02

(54) **METHODE D'EVALUATION DE LA SENSIBILITE D'UN VITRAGE A FORMER DES MARQUES DE TREMPE**

METHODE ZUR EINSCHÄTZUNG DER SENSIBILITÄT EINER VERGLASUNG FÜR DIE BILDUNG VON HÄRTUNGSSTREIFEN

METHOD FOR ASSESSING THE SENSITIVITY OF A GLASS PANEL TO FORMING QUENCH MARKS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**14.10.2020 Bulletin 2020/42**

(73) Titulaire: **SAINT-GOBAIN GLASS FRANCE**
**92400 Courbevoie (FR)**

(72) Inventeur: **HIVET, Romain**
**93400 SAINT-OUEN (FR)**

(74) Mandataire: **Saint-Gobain Recherche**
**Département Propriété Industrielle**
**39 Quai Lucien Lefranc**
**93300 Aubervilliers (FR)**

(56) Documents cités:
**WO-A1-2018/051029     FR-A1- 3 067 111**

**Description**

L'invention se rapporte à une méthode, mise en oeuvre par ordinateur, d'évaluation de la sensibilité d'un vitrage à former des marques de trempe en fonction de son anisotropie. Elle concerne le domaine des verres renforcés thermiquement, notamment les verres dits « durcis » thermiquement (« heat strengthened glass » en anglais) également appelés « semi-trempé », ou les verres dits trempés thermiquement, et plus particulièrement de tels verres revêtus d'au moins une couche mince.

Les verres concernés par la présente demande peuvent notamment être destinés aux façades des bâtiments, mobilier urbain, vitrages de véhicules de transport (automobile, bus, train, bateau, avion, etc).

Les traitements de renforcement thermique du verre, notamment de trempe thermique ou de durcissement thermique font intervenir un chauffage au-dessus de 600°C suivi d'un refroidissement rapide par jets d'air. Pour ce faire le verre est chauffé dans un four, notamment radiatif ou convectif, puis refroidi par un dispositif de refroidissement comprenant généralement des caissons de trempe administrant au verre une pluralité de jets d'air émis par des buses. Dans la grande majorité des installations de renforcement thermique, le verre est convoyé horizontalement par un lit de rouleaux. La vitesse des jets d'air est ajustée en fonction de l'épaisseur et du niveau de contrainte désiré dans le verre final.

Dans le cadre de la présente invention, l'expression renforcement thermique est une expression générale recouvrant le durcissement thermique et la trempe thermique. Le renforcement thermique du verre génère un champ de contrainte dans son épaisseur lui conférant une plus grande résistance mécanique à la flexion et un mode de rupture spécifique pouvant, notamment dans le cas du verre trempé, réduire le risque de blessure aux personnes en cas de casse. Ce champ de contrainte est obtenu par le différentiel de vitesse de refroidissement entre les surfaces des faces principales du verre et son coeur, pendant le figeage du verre. Plus le verre est épais, moins il est nécessaire de souffler fort pour générer le champ de contrainte résiduel à cause de la plus forte inertie thermique pour refroidir le coeur.

Les jets d'air du refroidissement sont généralement appliqués de manière simultanée sur les deux faces principales du verre. Ils peuvent être soufflés entre des rouleaux de convoyage des feuilles de verre. L'utilisation de jets d'air ne permet pas de garantir un refroidissement homogène de l'ensemble du verre. L'utilisation de verres à couches, notamment faiblement émissives, peut par ailleurs complexifier le réglage du four de chauffe. On peut observer une plus ou moins grande inhomogénéité du champ de température du verre avec parfois des gradients de température de plusieurs dizaines de °C sur une distance de seulement quelques centimètres lorsque le verre sort du four pour être ensuite refroidi. Selon son histoire thermique et en raison des propriétés de photo-elasticité du verre, cela peut se traduire, sous une lumière polarisée, par l'apparition d'iridescences bien connues des hommes du métier sous le nom de « marques de trempe » (« quench marks » ou « strain patterns » en anglais) ou « fleur de trempe » ou « tâches de léopard », ces expressions étant également utilisées pour le verre durci thermiquement également dit « semi-trempé ». On attribue cette inhomogénéité du verre à une distribution inhomogène et anisotrope des contraintes à l'intérieur du verre. Cette distribution de contraintes dépend en premier lieu de l'histoire thermique du verre, c'est-à-dire de la plus ou moins bonne homogénéité de son chauffage de renforcement thermique et de la plus ou moins bonne homogénéité de son refroidissement de renforcement thermique.

Différentes solutions ont déjà été proposées pour réduire les marques de trempe de verres renforcés thermiquement notamment comme proposé par WO2018051029.

Un revêtement appliqué sur un verre peut modifier l'apparence de ses marques de trempe, soit en l'augmentant, soit en la diminuant. Le document FR 3 067 111 A divulgue l'acquisition par balayage des marques de trempe présente sur un vitrage fabriqué afin d'en déterminer la qualité. Il n'existe actuellement aucun moyen simple de prévoir avant la réalisation d'un revêtement, l'influence de celui-ci sur les marques de trempe d'un verre renforcé thermiquement, et un objet de la présente invention est de remédier à cette lacune.

Selon l'invention, on considère que les marques de trempe d'un vitrage sont le résultat de différences de couleur entre différentes zones du vitrage. Comme ces marques de trempe ont pour origine une anisotropie de contraintes et que les zones aux contraintes différentes occasionnent des déphasages optiques différents aux rayons lumineux pour donner à ceux-ci une coloration différente, on a eu l'idée d'établir une échelle de mesure fondée sur la différence de couleur calculable entre une zone du substrat dépourvue de déphasage optique et une zone du même substrat occasionnant un déphasage optique donné. Cette échelle de mesure permet de comparer des vitrages pour des déphasages optiques identiques et des incidences de rayons lumineux identiques. On peut donc simuler avant leur réalisation des vitrages qui seraient renforcés thermiquement dans des conditions identiques, c'est-à-dire des vitrages ayant des zones occasionnant les mêmes déphasages optiques et des zones dépourvues de déphasage optique. On peut également, grâce à cette méthode, évaluer l'influence d'un système de revêtement sur la diminution ou l'accroissement des marques de trempe, en comparant le vitrage comprenant le système de revêtement avec le même vitrage dépourvu du système de revêtement. Dans le cadre de la présente invention, un système de revêtement est un revêtement disposé sur une seule face du vitrage ou est la combinaison de deux revêtements disposés chacun sur une face principale différente du vitrage, étant entendu qu'un revêtement est une couche mince ou un empilement de couches minces.

La présente invention est applicable aux vitrages comprenant un substrat verrier, revêtu ou non sur une ou sur ses deux faces principales d'une couche mince ou d'un empilement de couches minces. Les deux faces principale d'un vitrage sont en contact avec un environnement extérieur au vitrage comme par exemple l'air ambiant. Un substrat verrier comprend au moins une feuille de verre. Un substrat verrier peut être feuilleté et donc comprendre au moins deux feuilles de verre séparées par un intercalaire en matériau polymère comme du PVB. Le substrat verrier a sensiblement le même indice de réfraction sur toute son épaisseur. Le PVB a sensiblement le même indice de réfraction que le verre. Dans la présente demande, l'expression substrat verrier désigne la ou les feuilles de verre et le ou les éventuels intercalaires en matériau polymère, hors toute couche mince. L'invention n'est pas applicable aux vitrages dont le substrat verrier contient une couche mince insérée entre ses deux faces principales (comme un vitrage feuilleté comprenant une couche mince entre l'une de ses feuilles de verre et l'intercalaire en matériau polymère).

Dans le cadre de la présente invention, on considère qu'un déphasage optique observé pour une zone d'un vitrage est occasionné par le substrat verrier qu'il contient et non pas par la ou les couches minces éventuellement apposées sur ce substrat verrier. Une couche mince ou un empilement de couches minces modifie seulement l'apparence d'un motif de marque de trempe.

L'invention est applicable aux vitrages transparents, c'est-à-dire se laissant traverser par de la lumière dans le visible. Ainsi, tout matériau contenu dans le vitrage (verre, intercalaire en matériau polymère, couche mince) se laisse traverser par de la lumière dans le visible.

Une couche mince ou un empilement de couches minces a généralement une épaisseur comprise dans le domaine allant de 0,5 à 350 nm.

Une couche mince peut avoir une ou plusieurs des fonctions suivantes :

- antireflet,
- contrôle solaire,
- bas-émissive,
- anti-condensation,
- autonettoyante.

Une couche mince peut être choisie dans la liste suivante de matériaux : argent, oxyde de zinc, nitrure de silicium, oxyde de silicium, dioxyde de titane, oxyde d'étain, ITO.

Les marques de trempe peuvent être assimilées à une variation de couleur en différentes zone d'un substrat recevant une lumière polarisée pour un observateur regardant le vitrage. La lumière provenant du vitrage et vue par l'observateur peut être une lumière ayant traversé le vitrage auquel cas elle est dite « en transmission » ou une lumière réfléchie par le vitrage auquel cas elle est dite « en réflexion ». Les marques de trempe peuvent affecter la lumière en transmission et/ou la lumière en réflexion. On considère que le paramètre dit de la différence de couleur $\Delta E$ telle que définie par exemple par la commission internationale de l'éclairage (CIE) est représentative des différences de couleur produites par les marques de trempe. Selon la formulation de la CIE de 1976, on rappelle que

$$\Delta E^* = \sqrt{(L_2^* - L_1^*)^2 + (a_2^* - a_1^*)^2 + (b_2^* - b_1^*)^2}$$

dans laquelle $L_1^*, a_1^*, b_1^*$ sont les coordonnées dans l'espace colorimétrique CIE Lab de la première couleur à comparer et $L_2^*, a_2^*, b_2^*$ celles de la seconde. On peut utiliser une définition différente d'un écart colorimétrique, notamment une définition plus récente de $\Delta E$ dans le cadre de la présente invention comme l'une des définitions suivantes : la version CIE1994, CIEDE2000, CMC I :c (1984). Dans tous les cas, le $\Delta E$ représente une distance entre deux points correspondant à deux couleurs distinctes dans un espace de couleurs données.

Dans le cadre de la présente invention, on a conçu un paramètre $\sigma_v$ pour caractériser l'aptitude d'un vitrage à présenter des marques de trempe. Ce paramètre $\sigma_v$ est fondé sur la détermination de la différence de couleur entre un point du vitrage dépourvu de retard optique et un point du vitrage occasionnant un déphasage optique. Avantageusement, le paramètre $\sigma_v$ peut être indépendant ou peu dépendant du déphasage optique induit par le substrat verrier contenu dans le vitrage.

L'invention concerne une méthode d'évaluation de la sensibilité d'un vitrage à former des marques de trempe en fonction de son anisotropie telle que décrite dans la revendication 1, les revendications dépendantes étant des modes de réalisation avantageux.

Selon le modèle de la présente invention, le déphasage optique $\delta$ est indépendant de la longueur d'onde dans le spectre visible.

De préférence, l'angle des axes de biréfringence par rapport au plan d'incidence est de 45° et la polarisation est s ou p, car cela correspond aux conditions d'observations produisant les marques de trempe les plus visibles.

La fonction G calcule $\sigma_v$ à partir d'au moins un $\Delta E(\delta)$ et le cas échéant de chaque $\delta$ correspondant pour fournir

une valeur de $\sigma_v$ ayant une signification dans une échelle de mesure. On peut donc écrire $\sigma_v = G(\Delta E(\delta), \delta)$. Cela ouvre donc notamment la possibilité de choisir G telle que $\sigma_v = \Delta E(\delta)$. A un $\Delta E(\delta)$ correspond un $\delta$ donné. Si plusieurs $\Delta E(\delta)$ sont calculés, chaque $\Delta E(\delta)$ est calculé pour un $\delta$ différent.

La fonction G peut aussi être égale à une fonction F2 arbitraire ne dépendant que d'un $\sigma_\delta$ déterminé pour un $\delta$ donné ou de plusieurs $\sigma_\delta$ déterminés chacun pour un $\delta$ différent, chaque $\sigma_\delta$ étant égal au quotient de $\Delta E(\delta)$ par une fonction $F1(\delta)$ ne dépendant que du $\delta$ correspondant ($\sigma_\delta=\Delta E(\delta)/F1(\delta)$). On peut écrire $G=F2(\sigma_\delta)$. Notamment, la fonction F2 peut être une fonction polynôme du ou des $\sigma_\delta$.

Il est avantageux que le ou les $\sigma_\delta$ soit indépendant ou peu dépendant du déphasage optique occasionné par le vitrage car le $\sigma_v$ le serait aussi et serait alors plus représentatif de l'effet du revêtement sur les marques de trempe pour un plus clarge domaine de déphasages optiques. Dans la recherche d'une fonction F1 rendant le ou les $\sigma_\delta$ indépendant ou peu dépendant du déphasage optique, on a fait l'hypothèse de façon empirique et par intuition que $F1(\delta)$ pouvait avanta-geusement être proche ou égal à $\sin^2\delta$. Avec $F1(\delta) = \sin^2\delta$, on a observé que plus le déphasage optique $\delta$ est faible, plus $\sigma_\delta$ est indépendant du déphasage optique $\delta$. C'est pourquoi le domaine de déphasage optique pertinent dans le cadre de l'invention est de préférence proche de zéro et commence à zéro. Notamment la limite de $\sigma_\delta$ quand $\delta$ tend vers 0 est une bonne valeur de $\sigma_v$ pour caractériser un vitrage. On a effectivement pu constater que le quotient $\Delta E(\delta)/\sin^2(\delta)$ était sensiblement indépendant de $\delta$, surtout pour les faibles valeurs de $\delta$ (notamment $\delta < \pi/2$, en particulier $\delta < \pi/15$ et surtout pour $6< \pi/30$), ce qui correspond aux cas les plus courants. Bien entendu, d'autres fonctions que la fonction sinus et donnant des valeurs proches de celles données par la fonction sinus peuvent éventuellement convenir en tant que fonction F1. Par exemple un développement limité de la fonction sinus convient généralement. Autre exemple, pour les particulièrement faibles valeurs de $\delta$ comme $6< \pi/30$, $F1=\delta^2$ peut également convenir. C'est pourquoi, on considère satisfaisant de choisir F1 ($\delta$) donnant une valeur comprise entre ($\sin^2\delta$)-1 et ($\sin^2\delta$)+1 et de préférence entre ($\sin^2\delta$)-0,5 et ($\sin^2\delta$)+0,5.

La valeur de $\sigma_v$ caractérisant un vitrage peut être déterminée à partir d'un seul $\sigma_\delta$ pour une valeur donnée de déphasage optique ou à partir de plusieurs $\sigma_\delta$, chaque $\sigma_\delta$ étant déterminé pour une valeur différente de déphasage optique $\delta$. La valeur $\sigma_v$ peut être déterminée à l'aide d'une fonction $F2(\sigma_\delta)$ ne dépendant que du ou des $\sigma_\delta$. Cette fonction $F2(\sigma_\delta)$ est arbitraire et permet de caractériser un vitrage dans une échelle de mesures arbitraires. On peut comparer dans cette échelle de mesures le $\sigma_{v1}$ d'un vitrage V1 comprenant un substrat verrier et un système de revêtement avec le $\sigma_{v2}$ d'un vitrage V2 comprenant le même substrat verrier, mais dépourvu du système de revêtement, de façon à pouvoir évaluer si le système de revêtement va augmenter les marques de trempe ($\sigma_{v1}>\sigma_{v2}$) ou diminuer les marques de trempe ($\sigma_{v1}<\sigma_{v2}$) par rapport au substrat verrier nu. Cette comparaison est bien entendu réalisée avec les deux vitrages V1 et V2 en prenant la même échelle de mesure et donc les mêmes valeurs de $\delta$ et les mêmes fonctions G, F1 et F2. On note que le vitrage V2 peut très bien déjà comprendre une couche mince ou un empilement de couches minces sur l'une ou sur ses deux faces principales, le système de revêtement dans V1 venant ajouter une couche mince ou un empilement de couches minces sur celle(s) déjà présente(s) dans V2. Ainsi, on peut donc simuler avant réalisation d'un système de revêtement l'effet dudit système de revêtement sur les marques de trempe d'un vitrage, et choisir le système de revêtement le plus adapté.

Si un seul $\sigma_\delta$ est déterminé, alors la fonction $F2(\sigma_\delta)$ peut par exemple être simplement l'égalité à $\sigma_\delta(\sigma_v=\sigma_\delta)$. La fonction $F2(\sigma_\delta)$ peut être un polynôme de $\sigma_\delta$. Notamment, la fonction $F2(\sigma_\delta)$ peut être un coefficient de proportionnalité k ($\sigma_v=k.\sigma_\delta$). La fonction $F2(\sigma_\delta)$ peut aussi être l'addition ou la soustraction d'une valeur constante x.

Si on détermine un $\sigma_v$ à partir de plusieurs $\sigma_\delta$, dans un domaine de déphasages optiques $\delta$, donné, cette fonction $F2(\sigma_\delta)$ peut par exemple être une fonction polynôme de plusieurs $\sigma_\delta$, comme notamment une moyenne arith-métique des $\sigma_\delta$ dans ce domaine de déphasage optique $\delta$.

Quelle que soit la fonction $F2(\sigma_\delta)$ choisie, la limite de $\Delta E/F1$ ($\delta$) quand $\delta$ tend vers 0 (déphasage optique nul) est une valeur préférée de $\sigma_\delta$ car on a observé que $\Delta E/F1$ ($\delta$) est plus indépendant de $\delta$ quand $\delta$ tend vers 0. Ainsi, avantageusement, $\sigma_v=F2(\lim_{\delta\to 0}\Delta E/F1(\delta))$. Notamment, $\sigma_v$ peut simplement être égal à la limite de $\sigma_\delta$ quand $\delta$ tend vers 0. Notamment, $\sigma_v=\lim_{\delta\to 0}\Delta E/\sin^2(\delta)$ est particulièrement adapté.

Le domaine de déphasage optique $\delta$ est compris entre zéro et $\pi$. Généralement il suffit qu'il soit compris entre zéro et $\pi/2$ et même entre zéro et $\pi/15$ et même entre zéro et $\pi/30$. En effet, ce sont les valeurs de $\delta$ les plus proches de zéro qui mènent aux $\sigma_\delta$ les plus pertinents car les plus faiblement sensibles aux variations de $\delta$.

La fonction $F2(\sigma_\delta)$ est de préférence monotone (croissante ou décroissante) en fonction de $\delta$. La fonction $F2(\sigma_\delta)$ est arbitraire et choisie librement pour constituer une échelle de mesure. L'application de la fonction $F2(\sigma_\delta)$ peut également être mise en oeuvre par ordinateur.

Pour la détermination de $\sigma_v$, on peut n'utiliser (par application de la fonction $F2(\sigma_\delta)$) qu'une seule valeur de $\sigma_\delta$ correspondant à un $\delta$ faible, notamment inférieur à $\pi/2$, après avoir constaté que cette valeur de $\sigma_\delta$ varie peu en fonction de $\delta$ dans le domaine de $\delta$ considéré, ledit domaine commençant à zéro.

Pour la détermination de $\sigma_v$, on peut utiliser (par application de la fonction F2) plusieurs valeurs de $\sigma_\delta$ corres-pondant à des $\delta$ faibles, notamment inférieurs à $\pi/2$, après avoir constaté que ces valeurs de $\sigma_\delta$ varient peu en fonction de $\delta$ dans le domaine de $\delta$ considéré, ledit domaine commençant à zéro.

Que l'on n'utilise un seul $\sigma_\delta$ ou plusieurs $\sigma_\delta$, on choisit de préférence le domaine de $\delta$ de sorte que $\sigma_\delta$ varie de moins de 0,5 et de préférence de moins de 0,2 lorsque $\delta$ passe de 0 à la valeur la plus forte de ce domaine. Si on ne peut pas déterminer un $\sigma_\delta$ pour $\delta$ égal à zéro (c'est le cas si F1($\delta$) est $\sin^2\delta$), on peut prendre comme valeur de $\sigma_\delta$ à $\delta$ = 0, la limite de $\Delta$E/F1($\delta$) quand $\delta$ tend vers 0 (que l'on note $\lim_{\delta\to 0}\Delta E/F1(\delta)$). Avantageusement, la valeur la plus forte du domaine pour $\delta$ est inférieure à $\pi/15$ et de préférence inférieure à $\pi/30$.

L'effet d'iridescence des marques de trempe dépend fortement de l'état de polarisation de la lumière incidente et de l'angle d'incidence du rayon lumineux par rapport au substrat verrier. Par ailleurs, le $\Delta$E est généralement maximum pour un angle d'incidence par rapport au substrat verrier compris entre 50 et 80° et l'on choisit donc de préférence l'angle d'incidence comme étant compris dans ce domaine, notamment 60°.

De façon générale, un vitrage comprend deux faces dites face 1 et face 2 en contact avec un environnement extérieur. Chacune de ces faces a des propriétés de transmission et de réflexion en intensité caractéristiques de l'interface extérieur/intérieur. Ces propriétés sont représentées par les paramètres suivants :

$_x\tau_i(\theta)$ : coefficient de transmission de la face i (1 ou 2) pour une polarisation x (s ou p);

$^{ext}{}_x\rho_i(\theta)$ : coefficient de réflexion de la face extérieure i (1 ou 2) pour une polarisation x (s ou p);

$^{int}{}_x\rho_i(\theta)$ : coefficient de réflexion de la face intérieure i (1 ou 2) pour une polarisation x (s ou p);

soit 12 paramètres en tout pour caractériser les interfaces avec l'environnement extérieur au vitrage. Ces paramètres sont tous dépendants de la longueur d'onde et peuvent donc être représentés par des spectres en fonction de la longueur d'onde.

Ces paramètres $\tau$ et $\rho$ sont soit connus, soit mesurables de façon connue par l'homme du métier, notamment dans le cas d'une couche mince ou d'un empilement de couches minces. Ils sont déterminables (par mesures ou calcul) pour toute couche mince ou empilement de couches minces.

A partir de ces paramètres d'interface, on peut calculer les paramètres de transmission (T1 et T2) et de réflexion (R1 et R2) du vitrage en ses deux faces 1 et 2. T1 (respectivement T2) est le coefficient de transmission d'un rayon lumineux traversant le vitrage en l'impactant par la face 1 (respectivement face 2). R1 (respectivement R2) est le coefficient de réflexion du vitrage pour un rayon lumineux l'impactant par la face 1 (respectivement face 2).

De façon générale, l'état de polarisation change après chaque traversée du vitrage, notamment après chaque réflexion sur un interface interne). Dans le cas particulier où le faisceau incident est polarisé selon x (s ou p), où les axes de biréfringence du substrat sont orientés à 45° par rapport au plan d'incidence et où le déphasage s'exprime en fraction de $\pi$ : $\delta = \pi/n$ ($\pi/2$, $\pi/3$, $\pi/4$, ...) le faisceau redevient polarisé x après 2n réflexions. On définit les coefficients de transmission $_k\tau_i$ et de réflexion intérieurs $^{int}{}_k\rho_i$ pour les k (k = 0, 1, 2, 3, etc jusqu'à 2n) états de polarisation par les équations suivantes :

$$_k\tau_i = \cos^2\left(\frac{k\pi}{2n}\right){}_x\tau_i + \sin^2\left(\frac{k\pi}{2n}\right){}_y\tau_i$$

$$^{int}_k\rho_i = \cos^2\left(\frac{k\pi}{2n}\right){}^{int}_x\rho_i + \sin^2\left(\frac{k\pi}{2n}\right){}^{int}_y\rho_i$$

dans lesquelles la polarisation y est la polarisation orthogonale à x (x=s et y=p ou x=p et alors y=s). Le k[ème] état de polarisation correspond à la polarisation d'un faisceau initialement polarisé x qui a traversé k fois le substrat transparent.

Le paramètre $_k\tau_i$ représente donc le coefficient de transmission de la face i (1 ou 2) pour un rayon initialement de polarisation x après avoir traversé k fois le substrat transparent. Le paramètre $^{int}{}_k\rho_i$ représente le coefficient de réflexion de l'intérieur de la face i (1 ou 2) pour un rayon initialement de polarisation x après avoir traversé k fois le substrat transparent. Comme le faisceau redevient polarisé x après 2n réflexions, on note que :

$$_0\tau_i = {}_{2n}\tau_i = {}_x\tau_i$$

$$^{int}_0\rho_i = {}^{int}_{2n}\rho_i = {}^{int}_x\rho_i$$

Les paramètres T1, T2, R1 et R2 peuvent être déterminés grâce aux formules suivantes :

$$T_1\left(\theta, \delta = \frac{\pi}{n}\right) = {}_0\tau_1\, e^{-d\alpha} \times \frac{{}_1\tau_2 + \sum_{m=1}^{n-1}{}_{2m+1}\tau_2\, e^{-2md\alpha}\prod_{k=1}^{m}{}_{2k-1}^{int}\rho_2\, {}_{2k}^{int}\rho_1}{1 - e^{-2nd\alpha}\prod_{k=1}^{n}{}_{2k-1}^{int}\rho_2\, {}_{2k}^{int}\rho_1}$$

$$T_2\left(\theta, \delta = \frac{\pi}{n}\right) = {}_0\tau_2\, e^{-d\alpha} \times \frac{{}_1\tau_1 + \sum_{m=1}^{n-1}{}_{2m+1}\tau_1\, e^{-2md\alpha}\prod_{k=1}^{m}{}_{2k-1}^{int}\rho_1\, {}_{2k}^{int}\rho_2}{1 - e^{-2nd\alpha}\prod_{k=1}^{n}{}_{2k-1}^{int}\rho_1\, {}_{2k}^{int}\rho_2}$$

$$R_1\left(\theta, \delta = \frac{\pi}{n}\right) = {}_x^{ext}\rho_1 + {}_0\tau_1\, {}_1^{int}\rho_2\, e^{-2d\alpha} \times \frac{{}_2\tau_1 + \sum_{m=1}^{n-1}{}_{2m+2}\tau_1\, e^{-2md\alpha}\prod_{k=1}^{m}{}_{2k+1}^{int}\rho_2\, {}_{2k}^{int}\rho_1}{1 - e^{-2nd\alpha}\prod_{k=1}^{n}{}_{2k-1}^{int}\rho_2\, {}_{2k}^{int}\rho_1}$$

$$R_2\left(\theta, \delta = \frac{\pi}{n}\right) = {}_x^{ext}\rho_2 + {}_0\tau_2\, {}_1^{int}\rho_1\, e^{-2d\alpha} \times \frac{{}_2\tau_2 + \sum_{m=1}^{n-1}{}_{2m+2}\tau_2\, e^{-2md\alpha}\prod_{k=1}^{m}{}_{2k+1}^{int}\rho_1\, {}_{2k}^{int}\rho_2}{1 - e^{-2nd\alpha}\prod_{k=1}^{n}{}_{2k-1}^{int}\rho_1\, {}_{2k}^{int}\rho_2}$$

dans lesquelles

- d est l'épaisseur du vitrage,
- $\alpha$ est le coefficient d'absorption de la lumière du substrat verrier,
- $\theta$ est l'angle d'incidence,
- $\delta$ est le déphasage optique occasionné par le substrat verrier et égal à $\pi/n$ dans laquelle « n » est un entier positif,
- k et m sont des variables de sommation / produit, définis dans les expressions $\Sigma$ et $\pi$ .

Compte tenu de la faible épaisseur d'une couche mince ou d'un empilement de couches minces, on considère qu'un vitrage comprenant une couche mince ou un empilement de couches minces a la même épaisseur que le même vitrage dépourvu de toute couche mince.

A partir d'au moins un de ces paramètres T1, T2, R1, R2, connus dans tout le domaine du visible, l'homme du métier sait calculer la différence de couleur $\Delta E_s(\theta, \delta=\pi/n)$ entre une zone isotrope du substrat verrier n'occasionnant aucun déphasage optique et une zone occasionnant un déphasage optique $\delta=\pi/n$ , et ce pour une vision en transmission de la face 1, ou pour une vision en transmission de la face 2, ou pour une vision en réflexion de la face 1, ou pour une vision en réflexion de la face 2. Dans $\Delta E_s$, le S en indice représente T1 ou T2 ou R1 ou R2 pour exprimer qu'il existe un $\Delta E$ pour chacune de ces situations : transmission avec incidence par la face 1, transmission avec incidence par la face 2, réflexion de la face 1, réflexion de la face 2. Les formules ci-dessus donnant T1, T2, R1 et R2 tiennent compte des réflexions multiples à l'intérieur du vitrage et des transmissions multiples de rayons partiellement réfléchis. On choisit le $\Delta E_s$ (S=T1 ou T2 ou R1 ou R2) que l'on souhaite selon la condition d'observation prépondérante destinée du vitrage.

Dans le cadre de l'invention, on calcule en premier lieu par ordinateur au moins l'un de ces paramètres T1 ou T2 ou R1 ou R2 appliqué au vitrage que l'on se propose d'étudier. On peut alors calculer par ordinateur un $\sigma_\delta$ (un $\sigma_\delta$ pour chaque configuration T1, T2, R1, R2) selon

$$\sigma_\delta(\theta) = \Delta E_s(\theta, \delta)/F1(\delta)$$

pour un déphasage optique $\delta = (\pi/n)$ donné, n étant un nombre entier positif égal à 1 ou 2 ou 3 ou 4, etc, dans la zone occasionnant un déphasage optique. Ce calcul est avantageusement mis en oeuvre par ordinateur.

Si n=2, le vitrage a localement l'effet d'une lame quart d'onde. Dans le cas de l'incidence d'une lumière polarisée p, la lumière change de polarisation à chaque passage dans le vitrage de la façon suivante : polarisation p --> polarisation circulaire→ polarisation s --> polarisation circulaire --> polarisation p --> polarisation circulaire --> etc.

Les coefficients de transmission et de réflexion de l'état de polarisation intermédiaire (circulaire) sont :

$$_c\tau_i = 0.5\ {}_p\tau_i + 0.5\ {}_s\tau_i$$

$$^{int}_{c}\rho_i = 0.5 \,^{int}_{p}\rho_i + 0.5 \,^{int}_{s}\rho_i$$

Les paramètres de transmission et de réflexion du substrat sont alors :

$$T_1\left(\theta, \delta = \frac{\pi}{2}\right) = {_p\tau_1}\,{_c\tau_2}\,e^{-d\alpha} \times \frac{1 + e^{-2d\alpha}\,^{int}_{c}\rho_2\,^{int}_{s}\rho_1}{1 - e^{-4d\alpha}\left(^{int}_{c}\rho_2\right)^2\,^{int}_{s}\rho_1\,^{int}_{p}\rho_1}$$

$$T_2\left(\theta, \delta = \frac{\pi}{2}\right) = {_p\tau_2}\,{_c\tau_1}\,e^{-d\alpha} \times \frac{1 + e^{-2d\alpha}\,^{int}_{c}\rho_1\,^{int}_{s}\rho_2}{1 - e^{-4d\alpha}\left(^{int}_{c}\rho_1\right)^2\,^{int}_{s}\rho_2\,^{int}_{p}\rho_2}$$

$$R_1\left(\theta, \delta = \frac{\pi}{2}\right) = {^{ext}_{p}\rho_1} + {_p\tau_1}\,^{int}_{c}\rho_2\,e^{-2d\alpha} \times \frac{{_s\tau_1} + e^{-2d\alpha}\,^{int}_{c}\rho_2\,^{int}_{s}\rho_1\,{_p\tau_1}}{1 - e^{-4d\alpha}\left(^{int}_{c}\rho_2\right)^2\,^{int}_{s}\rho_1\,^{int}_{p}\rho_1}$$

$$R_2\left(\theta, \delta = \frac{\pi}{2}\right) = {^{ext}_{p}\rho_2} + {_p\tau_2}\,^{int}_{c}\rho_1\,e^{-2d\alpha} \times \frac{{_s\tau_2} + e^{-2d\alpha}\,^{int}_{c}\rho_1\,^{int}_{s}\rho_2\,{_p\tau_2}}{1 - e^{-4d\alpha}\left(^{int}_{c}\rho_1\right)^2\,^{int}_{s}\rho_2\,^{int}_{p}\rho_2}$$

Si l'on prend comme fonction F1 la fonction $\sin^2$ et puisque le déphasage optique est fixé ici à $\delta = \pi/2$ et que $\sin^2(\pi/2) = 1$, alors on a :

$$\sigma_{\delta=\frac{\pi}{2}}(\theta) = \Delta E_S(\theta, \delta = \frac{\pi}{2})$$

L'invention concerne également un procédé de fabrication d'un vitrage comprenant la réalisation de la méthode selon l'invention appliquée audit vitrage, suivi de la réalisation du vitrage. La méthode selon l'invention peut être appliquée à deux substrats verriers différents V1 et V2 à comparer dans la même échelle de mesures, menant à deux paramètres $\sigma_V$ notés respectivement $\sigma_{V1}$ et $\sigma_{V2}$. La comparaison de $\sigma_{V1}$ et $\sigma_{V2}$ permet de déterminer le vitrage devant avoir des marques de trempe moins prononcées que l'autre. Notamment, V1 peut être identique à V2 sauf qu'il comprend en plus un système de revêtement comprenant une couche mince ou un empilement de couches minces sur l'une ou sur ses deux faces principales. Avant sa réalisation, on peut donc déterminer si le système de revêtement est susceptible de réduire ou augmenter les marques de trempe. L'invention concerne également un procédé de de fabrication du vitrage V1 comprenant la réalisation de la méthode selon l'invention appliquée aux vitrages V1 et V2, puis la réalisation du système de revêtement. Notamment, l'invention concerne également un procédé de fabrication d'un vitrage comprenant l'application d'un système de revêtement sur un substrat verrier comprenant l'utilisation de la méthode selon l'invention en vue de choisir un système de revêtement, puis la réalisation du système de revêtement sur le substrat verrier.

L'invention concerne également un programme d'ordinateur comprenant des portions d'instruction ou des instructions de code de programme pour l'exécution d'au moins une étape de calcul mise en oeuvre par ordinateur de la méthode selon l'invention,. L'invention concerne également un support d'enregistrement lisible par ordinateur sur lequel est enregistré ce programme d'ordinateur.

## Exemple 1

On se propose de déterminer l'influence d'un empilement de couches minces comprenant notamment une couche de 8 nm d'argent sur les marques de trempes d'une feuille de verre de marque Planiclear (commercialisée par Saint-Gobain Glass France) d'épaisseur 10 mm.

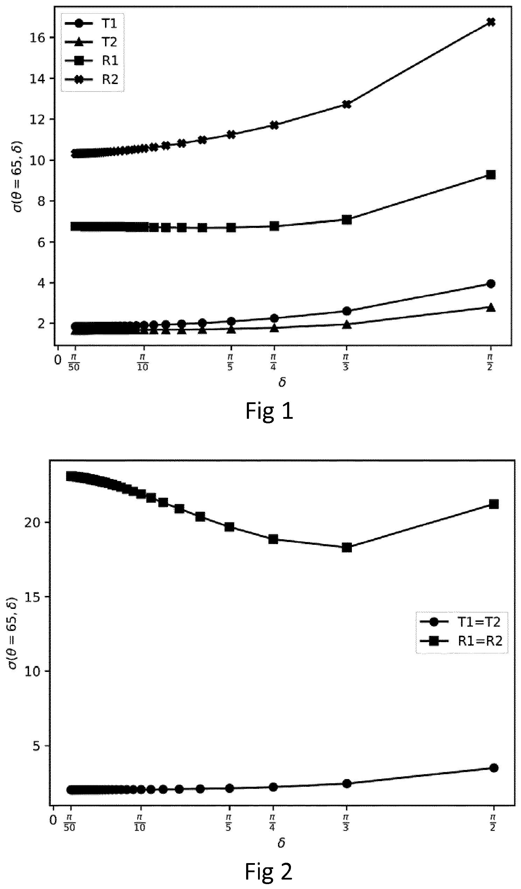

Pour ce faire, on détermine des valeurs de $\sigma_\delta$ pour différentes valeurs de déphasage optique $\delta = \pi/n$ avec n allant de 2 à 50, pour un angle d'incidence de 65°, et ce pour les quatre spectres en configuration T1, T2, R1 et R2, et ce pour la feuille de verre revêtue (voir figure 1) et pour la feuille de verre non revêtue (voir figure 2).

On voit sur les figures 1 et 2 que plus le déphasage optique $\delta$ est faible, plus $\sigma_\delta$ est indépendant du déphasage

optique $\delta$. C'est pourquoi, le domaine de déphasage optique pertinent dans le cadre de l'invention est de préférence proche de zéro et commence à zéro. Notamment la limite de $\sigma_\delta$ quand $\delta$ tend vers 0 est une bonne valeur pour caractériser un vitrage.

Dans le cas de la feuille de verre non revêtue (figure 2), comme le vitrage est symétrique, la face 1 étant identique à la face 2, les valeurs de $\sigma_\delta$ en T1 et en T2 se confondent, et les valeurs de $\sigma_\delta$ en R1 et en R2 se confondent également. Ces valeurs sont ici les coefficients de Fresnel.

La comparaison des figures 1 et 2 montre que les valeurs de $\sigma_\delta$ en configuration T1 et T2 sont peu influencées par le revêtement. Par contre, à déphasage optique identique, les valeurs de $\sigma_\delta$ en configuration R1 et R2 sont beaucoup plus faibles en présence du revêtement. Le revêtement aura donc pour un angle d'incidence de 65° une action réductrice des marques de trempe en configuration R1 et R2 par rapport au substrat verrier nu.

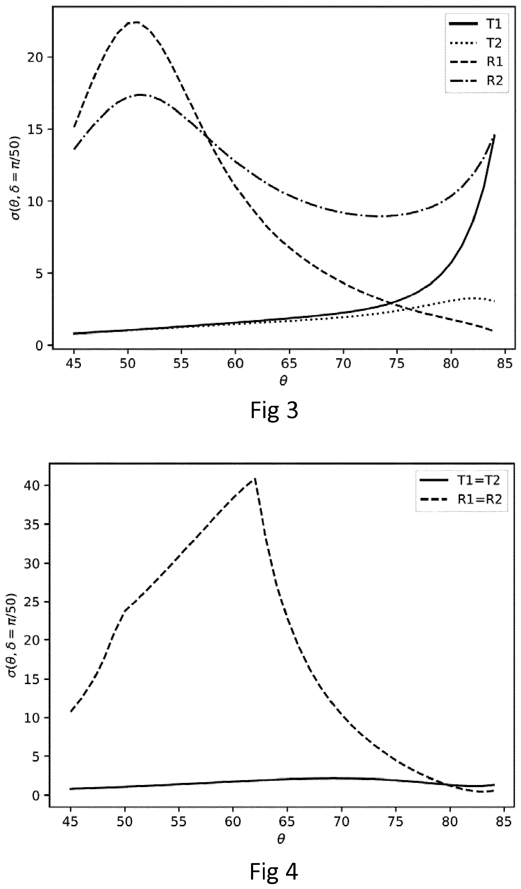

On a par ailleurs calculé la valeur limite de $\sigma_\delta$ quand $\delta$ tend vers 0 mais pour un angle d'incidence variant de 45 à 85°. La figure 3 montre les résultats pour le Planiclear revêtu du revêtement et la figure 4 pour le Planiclear nu.

La sensibilité maximale en réflexion extérieure (R2) pour le verre revêtu est de 17,5 à 51° tandis qu'elle est de 41 à 62° pour le verre nu. Globalement, le revêtement aura donc une action réductrice des marques de trempe par rapport au substrat verrier nu.

### Exemple 2

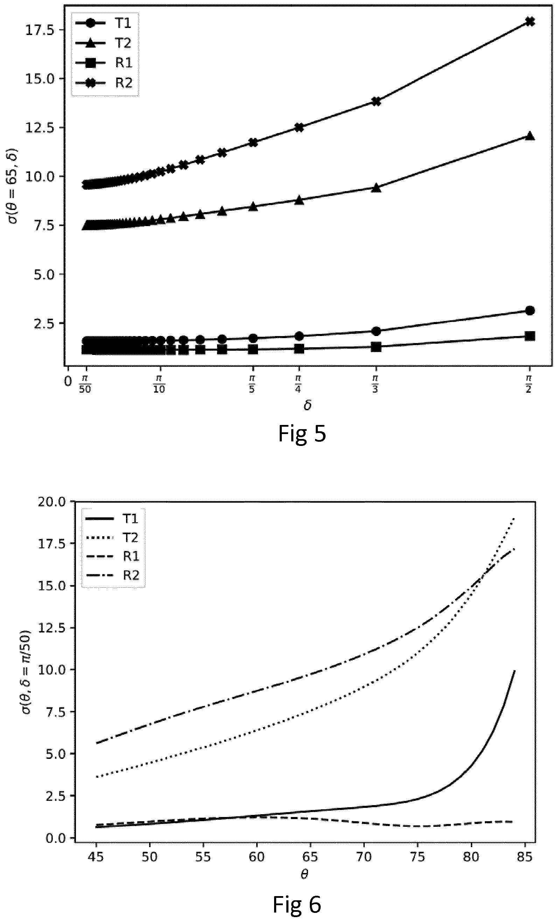

On procède comme pour l'exemple 1 sauf que le revêtement comprend un empilement de couches minces comprenant deux couches d'argent d'épaisseurs respectivement de 12 et 22 nm déposées sur la face 1 d'un verre Planiclear d'épaisseur 10 mm. La figure 5 montre les résultats. Ici également, plus le déphasage optique $\delta$ est faible, plus $\sigma_\delta$ est indépendant du déphasage optique $\delta$. On peut également dire que le revêtement aura une action réductrice à 65° des marques de trempe en configuration R1 et R2 par rapport au substrat verrier nu (comparer avec la figure 2). On a par ailleurs calculé la valeur de $\sigma_\delta$ quand $\delta$ tend vers 0 mais pour un angle d'incidence variant de 45 à 85°. La figure 6 montre les résultats. Ici également, la sensibilité maximale est plus faible avec le revêtement que sur le verre nu (comparer avec la figure 4) et l'on peut dire que le revêtement attenue la visibilité des marques de trempes.

### Revendications

1. Méthode, mise en oeuvre par ordinateur, d'évaluation de la sensibilité d'un vitrage à former des marques de trempe en fonction de son anisotropie, ladite méthode fournissant en valeur de sortie une valeur de paramètre $\sigma_V$ caractérisant l'aptitude dudit vitrage à former des marques de trempe , ledit vitrage comprenant une face 1 et une face 2, toutes deux en contact avec un environnement extérieur, lesdites marques de trempe résultant de déphasages optiques différents en des zones différentes du vitrage pour une vision en transmission ou en réflexion et d'un côté ou de l'autre du vitrage, ladite méthode comprenant les étapes suivantes

   - le calcul d'au moins un paramètre de transmission par la face 1 ou par la face 2, dits T1 ou T2, ou d'au moins un paramètre de réflexion sur la face 1 ou sur la face 2, dits R1 et R2, ce calcul étant réalisé d'une part pour une zone du vitrage n'occasionnant pas de déphasage optique et d'autre part pour une zone du vitrage présentant des axes de biréfringence orientés à un angle donné par rapport au plan d'incidence et occasionnant un déphasage optique $\delta$ à un rayon lumineux dans un domaine donné de déphasage optique, et ce pour une polarisation donnée du rayon lumineux et pour un angle d'incidence donné du rayon lumineux;
   - le calcul d'au moins un paramètre $\Delta E(\delta)$ correspondant à la différence de couleur entre la zone du vitrage n'occasionnant pas de déphasage optique et la zone du vitrage occasionnant le déphasage optique $\delta$, à partir d'au moins un des paramètres T1, T2, R1, R2, puis
   - le calcul de $\sigma_V = G(\Delta E(\delta), \delta)$ par application d'une fonction G dépendant du ou des $\Delta E(\delta)$ calculés et le cas échéant du ou des $\delta$ correspondant.

2. Méthode selon la revendication précédente, **caractérisé en ce que** la fonction G est égale à une fonction F2 arbitraire ne dépendant que d'un $\sigma_\delta$ déterminé pour un $\delta$ donné ou de plusieurs $\sigma_\delta$ déterminés chacun pour un $\delta$ différent, chaque $\sigma_\delta$ étant égal au quotient de $\Delta E(\delta)$ par une fonction F1($\delta$) ne dépendant que du $\delta$ correspondant.

3. Méthode selon la revendication précédente, **caractérisé en ce que** la fonction F2 est une fonction polynôme du ou des $\sigma_\delta$.

4. Méthode selon l'une des deux revendications précédentes, **caractérisé en ce que** la fonction F1($\delta$) fournit pour chaque $\delta$ considéré une valeur comprise entre $(\sin^2\delta)-1$ et $(\sin^2\delta)+1$.

5. Méthode selon la revendication précédente, **caractérisé en ce que** la fonction $F1(\delta)$ fournit pour chaque $\delta$ considéré une valeur comprise entre $(\sin^2\delta)$-0,5 et $(\sin^2\delta)$+0,5.

6. Méthode selon la revendication précédente, **caractérisé en ce que** la fonction $F1(\delta)$ est égale à $\sin^2\delta$.

7. Méthode selon l'une des revendications précédentes, **caractérisé en ce que** le ou les déphasage(s) optique(s) $\delta$ sont compris dans un domaine de déphasage optique allant de 0 à $\pi/2$.

8. Méthode selon la revendication précédente, **caractérisé en ce que** le ou les déphasage(s) optique(s) $\delta$ sont compris dans un domaine de déphasage optique allant de 0 à $\pi/15$.

9. Méthode selon la revendication précédente, **caractérisé en ce que** le ou les déphasage(s) optique(s) $\delta$ sont compris dans un domaine de déphasage optique allant de 0 à $\pi/30$.

10. Méthode selon l'une des revendications 2 à 9, **caractérisé en ce que** le $\sigma_\delta$ ou les $\sigma_\delta$ utilisés pour le calcul de $\sigma_v$ sont choisis pour un domaine de déphasage optique $\delta$, dans lequel $\sigma_\delta$ varie de moins de 0,5 et de préférence de moins de 0,2 lorsque $\delta$ passe de la limite de $\Delta E/F1(\delta)$ quand $\delta$ tend vers 0 à la valeur la plus forte de ce domaine.

11. Méthode selon l'une des revendications 2 à 10, **caractérisé en ce que** $\sigma_v=F2(\lim_{\delta\to0}\Delta E/F1(\delta))$.

12. Méthode selon la revendication précédente, **caractérisé en ce que** $\sigma_v=\lim_{\delta\to0}\Delta E/F1(\delta)$.

13. Méthode selon la revendication précédente, **caractérisé en ce que** $\sigma_v=\lim_{\delta\to0}\Delta E/\sin^2(\delta)$.

14. Méthode selon l'une des revendications précédentes, **caractérisé en ce qu'**elle est appliquée à deux substrats verriers différents V1 et V2 à comparer dans la même échelle de mesures, menant à deux paramètres $\sigma_v$ notés respectivement $\sigma_{V1}$ et $\sigma_{V2}$.

15. Méthode selon la revendication précédente, **caractérisé en ce que** V1 est identique à V2 sauf qu'il comprend en plus un système de revêtement comprenant une couche mince ou un empilement de couches minces sur l'une ou sur ses deux faces principales.

16. Procédé de fabrication d'un vitrage comprenant la réalisation de la méthode appliquée audit vitrage selon l'une des revendications 1 à 13, suivi de la réalisation du vitrage.

17. Procédé de fabrication du vitrage V1 comprenant la réalisation de la méthode de la revendication 15, puis la réalisation du système de revêtement.

18. Programme d'ordinateur comprenant des instructions qui, lorsque le programme est exécuté par ordinateur, conduisent celui-ci à mettre en œuvre la méthode selon l'une des revendications de méthode précédentes.

19. Support d'enregistrement lisible par un ordinateur sur lequel est enregistré le programme d'ordinateur de la revendication précédente.

**Patentansprüche**

1. Verfahren, das durch einen Computer implementiert wird, zum Beurteilen der Empfindlichkeit einer Verglasung für ein Ausbilden von Tempermarken in Abhängigkeit von ihrer Anisotropie, wobei das Verfahren als Ausgabewert einen Wert eines Parameters $\sigma_v$ bereitstellt, der die Fähigkeit der Verglasung kennzeichnet, Tempermarken auszubilden, die Verglasung umfassend eine Fläche 1 und eine Fläche 2, die beide in Kontakt mit einer Außenumgebung sind, wobei sich die Tempermarken aus verschiedenen optischen Phasenverschiebungen in verschiedenen Bereichen der Verglasung für eine Transmissions- oder Reflexionssicht und auf der einen oder der anderen Seite der Verglasung ergeben, das Verfahren umfassend die folgenden Schritte

    - Berechnen mindestens eines Parameters einer Transmission durch die Fläche 1 oder durch die Fläche 2, T1 oder T2 genannt, oder mindestens eines Parameters einer Reflexion an der Fläche 1 oder an der Fläche 2, R1 und R2 genannt, wobei dieses Berechnen einerseits für einen Verglasungsbereich, der keine optische Phasenverschiebung verursacht, und andererseits für einen Verglasungsbereich durchgeführt wird, der Doppelbrechungsachsen aufweist, die in einem gegebenen Winkel bezogen auf die Einfallsebene ausgerichtet sind, und eine optische Phasenverschiebung $\delta$ in einem Lichtstrahl in einer gegebenen Domäne der optischen Phasenverschiebung verursacht, und dies für eine gegebene Polarisation des Lichtstrahls und für einen gegebenen Einfallswinkel des Lichtstrahls;

- Berechnen mindestens eines Parameters $\Delta E(\delta)$, der dem Farbunterschied zwischen dem Verglasungsbereich, der keine optische Phasenverschiebung verursacht, und dem Verglasungsbereich entspricht, der die optische Phasenverschiebung $\delta$ verursacht, ausgehend von mindestens einem der Parameter T1, T2, R1, R2, dann

- Berechnen von $\sigma_v = G(\Delta E(\delta), \delta)$ durch Anwendung einer Funktion G, die von dem oder den berechneten $\Delta E(\delta)$ und gegebenenfalls dem oder den entsprechenden $\delta$ abhängt.

2. Verfahren nach dem vorstehenden Anspruch,
**dadurch gekennzeichnet, dass** die Funktion G gleich einer Arbiträrfunktion F2 ist, die nur von einem $\sigma_\delta$, das durch ein gegebenes $\delta$ bestimmt wird, oder von mehreren $\sigma_\delta$ abhängt, die jeweils durch ein verschiedenes $\delta$ bestimmt werden, wobei jedes $\sigma_\delta$ gleich dem Quotienten von $\Delta E(\delta)$ durch eine Funktion $F1(\delta)$ ist, die nur von dem entsprechenden $\delta$ abhängt.

3. Verfahren nach dem vorstehenden Anspruch,
**dadurch gekennzeichnet, dass** die Funktion F2 eine Polynomfunktion des oder der $\sigma_\delta$ ist.

4. Verfahren nach einem der zwei vorstehenden Ansprüche,
**dadurch gekennzeichnet, dass** die Funktion $F1(\delta)$ für jedes berücksichtigte $\delta$ einen Wert zwischen $(\sin^2\delta)-1$ und $(\sin^2\delta)+1$ bereitstellt.

5. Verfahren nach dem vorstehenden Anspruch,
**dadurch gekennzeichnet, dass** die Funktion $F1(\delta)$ für jedes berücksichtigte $\delta$ einen Wert zwischen $(\sin^2\delta)-0,5$ und $(\sin^2\delta)+0,5$ bereitstellt.

6. Verfahren nach dem vorstehenden Anspruch,
**dadurch gekennzeichnet, dass** die Funktion $F1(\delta)$ gleich $\sin^2\delta$ ist.

7. Verfahren nach einem der vorstehenden Ansprüche,
**dadurch gekennzeichnet, dass** die optische(n) Phasenverschiebung(en) $\delta$ in einer Domäne der optischen Phasenverschiebung enthalten sind, die von 0 bis $\pi/2$ reicht.

8. Verfahren nach dem vorstehenden Anspruch,
**dadurch gekennzeichnet, dass** die optische(n) Phasenverschiebung(en) $\delta$ in einer Domäne der optischen Phasenverschiebung enthalten sind, die von 0 bis $\pi/15$ reicht.

9. Verfahren nach einem der vorstehenden Ansprüche,
**dadurch gekennzeichnet, dass** die optische(n) Phasenverschiebung(en) $\delta$ in einer Domäne der optischen Phasenverschiebung enthalten sind, die von 0 bis $\pi/30$ reicht.

10. Verfahren nach einem der Ansprüche 2 bis 9,
**dadurch gekennzeichnet, dass** das $\sigma_\delta$ oder die $\sigma_\delta$, die für das Berechnen von $\sigma_v$ verwendet werden, für eine Domäne der optischen Phasenverschiebung $\delta$ gewählt werden, in der $\sigma_\delta$ um weniger als 0,5 und vorzugsweise weniger als 0,2 variiert, wenn $\delta$ von dem Grenzwert von $\Delta E/F1(\delta)$, wenn $\delta$ gegen 0 geht, zu dem höchsten Wert dieser Domäne übergeht.

11. Verfahren nach einem der Ansprüche 2 bis 10, **dadurch gekennzeichnet, dass** $\sigma_v = F2(\lim_{\delta\to 0}\Delta E/F1(\delta))$.

12. Verfahren nach dem vorstehenden Anspruch,
**dadurch gekennzeichnet, dass** $\sigma_v = \lim_{\delta\to 0}\Delta E/F1(\delta)$.

13. Verfahren nach dem vorstehenden Anspruch,
**dadurch gekennzeichnet, dass** $\sigma_v = \lim_{\delta\to 0}\Delta E/\sin^2(\delta)$.

14. Verfahren nach einem der vorstehenden Ansprüche,

**dadurch gekennzeichnet, dass** es auf zwei verschiedene Glassubstrate V1 und V2 angewendet wird, um in derselben Messwertskala verglichen zu werden, was zu zwei Parametern $\sigma_v$ führt, die als $\sigma_{v1}$ beziehungsweise $\sigma_{v2}$ bezeichnet werden.

**15.** Verfahren nach dem vorstehenden Anspruch,
**dadurch gekennzeichnet, dass** V1 identisch mit V2 ist, abgesehen davon, dass es außerdem ein Beschichtungssystem umfasst, umfassend eine dünne Schicht oder eine Stapelung von dünnen Schichten auf der einen oder auf seinen zwei Hauptflächen.

**16.** Verfahren zum Herstellen einer Verglasung, umfassend das Durchführen des auf die Verglasung angewendeten Verfahrens nach einem der Ansprüche 1 bis 13, gefolgt von dem Fertigen der Verglasung.

**17.** Verfahren zum Herstellen der Verglasung V1, umfassend das Durchführen des Verfahrens nach Anspruch 15, dann das Fertigen des Beschichtungssystems.

**18.** Computerprogramm, umfassend Anweisungen, die, wenn das Programm durch den Computer ausgeführt wird, diesen veranlassen, das Verfahren nach einem der vorstehenden Verfahrensansprüche zu implementieren.

**19.** Speichermedium, das durch einen Computer lesbar ist, auf dem das Computerprogramm des vorstehenden Anspruchs gespeichert ist.

**Claims**

**1.** Method, implemented by computer, for evaluating the sensitivity of a glazing to form hardening marks as a function of its anisotropy, said method providing output value a parameter value $\sigma_v$ characterizing the ability of said glazing to form hardening marks, said glazing comprising one side 1 and one side 2, both in contact with an external environment, said hardening marks resulting from different optical phase shifts in different areas of the glazing for transmission or reflection vision and on either side of the glazing, said method comprising the following steps

- the calculation of at least one transmission parameter by face 1 or by face 2, called T1 or T2, or at least one reflection parameter on face 1 or face 2, said R1 and R2, this calculation being carried out on the one hand for an area of the glazing not causing optical phase shift and on the other hand for an area of the glazing having birefringence axes oriented at a given angle in relation to the plane of incidence and causing an optical phase shift $\delta$ to a light ray in a given optical phase shift range, for a given polarization of the light ray and for a given angle of incidence of the light ray;
- the calculation of at least one parameter $\Delta E(\delta)$ corresponding to the difference in colour between the area of the glazing not causing optical phase shift and the area of the glazing causing optical phase shift $\delta$, from at least one of the parameters T1, T2, R1, R2, then
- the calculation of $\sigma_v = G(\Delta E(\delta), \delta)$ by applying a function G depending on the $\Delta E(\delta)$ calculated and, where applicable, the corresponding $\delta$.

**2.** A method according to the preceding claim, **characterized in that** the function G is equal to an arbitrary function F2 depending only on a $\sigma\delta$ determined for a given $\delta$ or several $\sigma\delta$ determined each for a different $\delta$, each $\sigma\delta$ being equal to the quotient of $\Delta E(\delta)$ by a function F1 $(\delta)$ depending only on the corresponding $\delta$.

**3.** Method according to the preceding claim, **characterized in that** the function F2 is a polynomial function of the $\sigma\delta$.

**4.** Method according to one of the two preceding claims, **characterized in that** the function F1 $(\delta)$ provides for each $\delta$ considered a value between $(\sin^2\delta)$ -1 and $(\sin^2\delta)$ + 1.

**5.** Method according to the preceding claim, **characterized in that** the function F1 $(\delta)$ provides for each $\delta$ considered a value between $(\sin^2\delta)$ -0.5 and $(\sin^2\delta)$ + 0.5.

**6.** Method according to the preceding claim, **characterized in that** the function F1 $(\delta)$ is equal to $\sin^2\delta$.

**7.** Method according to one of the preceding claims, **characterized in that** the optical phase shift (s) (s) $\delta$ are included in an optical phase shift range from 0 to $\pi/2$.

8. Method according to the preceding claim, **characterized in that** the optical phase shift (s) $\delta$ are included in an optical phase shift range from 0 to $\pi/15$.

9. Method according to the preceding claim, **characterized in that** the optical phase shift (s) (s) $\delta$ are included in an optical phase shift range from 0 to $\pi/30$.

10. A method according to one of claims 2 to 9, **characterized in that** the $\sigma\delta$ or$_\delta$ $\sigma$ used for the calculation of $\sigma_v$ are selected for an optical phase shift domain $\delta$, wherein $\sigma\delta$ varies from less than 0.5 and preferably less than 0.2 when $\delta$ passes from the limit of $\Delta E / F1 (\delta)$ when $\delta$ tends to 0 to the highest value of this domain.

11. Method according to one of claims 2 to 10, **characterized in that** $\sigma_v = F2(\lim_{\delta\to 0}\Delta E/F1(\delta))$.

12. Method according to the preceding claim, **characterized in that** $\sigma_v = \lim_{\delta\to 0}\Delta E/F1(\delta)$.

13. Method according to the preceding claim, **characterized in that** $\sigma_v = \lim_{\delta\to 0}\Delta E/\sin^2(\delta)$.

14. Method according to one of the preceding claims, **characterized in that** it is applied to two different glass substrates V1 and V2 to be compared in the same scale of measurements, leading to two parameters $\sigma_v$ noted respectively $\sigma_{v1}$ and $\sigma_{v2}$.

15. Method according to the preceding claim, **characterized in that** V1 is identical to V2 except that it further comprises a coating system comprising a thin film or a stack of thin films on one or both of its main faces.

16. A method of manufacturing a glazing comprising the realization of the method applied to said glazing according to one of claims 1 to 13, followed by the realization of the glazing.

17. Method for manufacturing glazing V1 comprising the realization of the method of claim 15, then the realization of the coating system.

18. Computer program comprising instructions which, when the program is executed by the computer, cause the computer to implement the method according to one of the preceding method claims.

19. A computer-readable recording medium on which the computer program of the preceding claim is recorded.

Fig 1

Fig 2

Fig 3

Fig 4

Fig 5

Fig 6

## RÉFÉRENCES CITÉES DANS LA DESCRIPTION

**Documents brevets cités dans la description**

- WO 2018051029 A
- FR 3067111 A